# EUROPÄISCHE PATENTSCHRIFT

(11) **EP 0 608 391 B1**
(45) Veröffentlichungstag und Bekanntmachung des Hinweises auf die Patenterteilung: **14.01.1998**
(21) Anmeldenummer: 93915675.8
(22) Anmeldetag: 30.07.1993
(51) Int. Cl.: B01D 53/00, B60H 1/00, B60H 1/32

(54) **VERFAHREN ZUR ABSCHEIDUNG VON KOHLENWASSERSTOFFEN AUS DER EINER FAHRZEUGKABINE ZUZUFÜHRENDEN FRISCHLUFT**
METHOD OF SEPARATING OUT ORGANIC CONTAMINANTS FROM THE AIR SUPPLY TO A VEHICLE CABIN
PROCEDE POUR LA SEPARATION D'HYDROCARBURES CONTENUS DANS L'AIR FRAIS A AMENER DANS UNE CABINE DE VEHICULE

(30) Priorität: 10.08.1992 DE 4226382
(43) Veröffentlichungstag der Anmeldung: 03.08.1994
(73) Patentinhaber: Hölter, Heinz, Dipl.-Ing., D-45964 Gladbeck (DE)
(72) Erfinder: Hölter, Heinz, Dipl.-Ing., D-45964 Gladbeck (DE)
(86) Internationale Anmeldenummer: DE9300670
(87) Internationale Veröffentlichungsnummer: WO9403262

(56) Entgegenhaltungen:
- EP-A- 0 120 753
- EP-A- 0 280 942
- DE-A- 3 712 209
- DE-A- 3 907 437
- DE-A- 4 013 409
- DE-A- 4 038 699
- DE-A- 4 040 340

## Beschreibung

Die Erfindung betrifft ein Verfahren zur Abscheidung von Pflanzenschutzmittelaerosolen und -dämpfen aus der einer Fahrzeugkabine zuzuführenden Frischluft.

Die in der Landwirtschaft heute eingesetzten modernen Traktoren verfügen in den meisten Fällen über eine abgeschlossene Fahrzeugkabine. Diese Fahrzeugkabinen sind schalldämmend ausgebildet und sind in der Regel auch bereits an eine Klimaanlage angeschlossen.

Insbesondere beim Verspritzen von Pflanzenschutzmitteln, in der Regel sind dies Pestizide oder Herbizide, wie Atrazin, Bromacil bzw. Propazin, erweist es sich als nachteilig, daß zusammen mit der in die Fahrzeugkabine einströmenden Frischluft Aerosole bzw. Dämpfe derartiger Pflanzenschutzmittel mitgeführt werden, die insbesondere bei längerem Spritzeinsatz zu einer Beeinträchtigung bzw. Gefährdung der Gesundheit des Fahrzeugführers führen können.

Die Entgegenhaltungen DE-A-4 038 699 und DE-A-4 040 340 offenbaren ein Verfahren gemäß dem Oberbegriff von Anspruch 1, wobei die beladene Frischluft in einem Naßabscheider behandelt wird.

Es ist bereits vorgeschlagen worden, mit schädlichen Kohlenwasserstoffen beladene Luft im Bereich kleinerer Arbeitsräume, von Kabinen oder Werkstätten u.a. mittels Aktivkohlefilter zu reinigen. Beim Einsatz derartiger Filter erweist es sich jedoch als nachteilig, daß mit zunehmender Beladung die Reinigungswirkung stark nachläßt und somit eine vollständige Abscheidung der toxischen Schadstoffe nicht mehr gewährleistet ist. Hinzu kommt, daß die Entsorgung der beladenen Aktivkohlefilter selbst wieder Probleme bereitet.

Darüber hinaus ist die Anwendung von Kältemaschinen zum Abscheiden von Aerosolen und Dämpfen aus der Abluft von Arbeitsräumen schon bekannt, und zwar aus den Entgegenhaltungen DE-A-3 907 437 und DE-A-4 013 409.

Schließlich offenbart die Schrift EP-A-0 120 753 ein Verfahren gemäß dem Oberbegriff von Anspruch 1, wobei die Kälteenergie des Verdampfers der vorhandenen Klimaanlage benutzt wird, und zwar zum Kühlen der behandelten Frischluft.

Der Erfindung liegt die Aufgabe zugrunde, ein einfaches und wirtschaftlich zu betreibenden Verfahren zur Abscheidung von Pflanzenschutzmittelaerosolen und -dämpfen aus der einer Fahrzeugkabine zuzuführenden Frischluft zu entwickeln.

Diese Aufgabe wird erfindungsgemäß dadurch gelöst, daß die beladene Frischluft einer partiellen Kondensation mit anschliessender Phasentrennung unterzogen wird, wobei die für die partielle Kondensation benötige Kälte aus dem Kreislauf einer für die Fahrzeugkabine vorgesehenen Klimaanlage eingekoppelt wird. Beispielsweise kann der Frischluftstrom in einfacher Weise über den Verdampfer der Klimaanlage geleitet werden.

Durch das erfindungsgemäße Verfahren gelingt es auf einfache Weise und ohne die Erzeugung von beladenen Abfallstoffen, die schädlichen Kohlenwasserstoffe aus dem Frischluftstrom der Fahrzeugkabine abzutrennen. Es braucht lediglich eine Art Kühlfalle errichtet zu werden, in der die Frischluft unter den Taupunkt der abzutrennenden Komponenten abgekühlt wird und die eine Einrichtung zum Sammeln und Ableiten des anfallenden Kondensates aufweist.

Je nach dem im jeweiligen Einzelfall erforderlichen Grad der Abkühlung der Frischluft kann es sich nach einem weiteren Merkmal der Erfindung als wirtschaftlich sinnvoll erweisen, zur Vermeidung von Kälteverlusten den im Anschluß an die Abtrennung des Kondensats vorliegenden kalten Luftstrom vor der Weiterführung in die Fahrzeugkabine im Wärmetausch mit zu kühlender Frischluft anzuwärmen. Auf diese Weise würde auch eine Unterkühlung der Fahrzeugkabine vermieden.

Wie sich gezeigt hat, erweist sich das erfindungsgemäße Verfahren besonders vorteilhaft in Verbindung mit einer der partiellen Kondensation und Phasentrennung vorgeschalteten Naßabscheidungsstufe, die mit Wasser als Waschmittel betrieben wird, welches beispielsweise dem Frischwassertank der Pflanzenschutzmittelspritzanlage entnommen werden kann. In der Naßabscheidungsstufe wird dem Frischluftstrom bereits ein großer Teil der mitgeführten Pflanzenschutzmittelaerosole und -dämpfe entzogen, so daß die nachgeschaltete weitere Behandlungsstufe entsprechend entlastet wird. Hinzu kommt, daß sich aufgrund des aus der Naßreinigungsstufe mitgeführten Wasserdampfes bei der partiellen Kondensation Wassertröpfchen bilden, in die schädliche Pflanzenschutzmittelteilchen eingebunden werden, wodurch sich die Wirksamkeit der Abscheidung weiter erhöht.

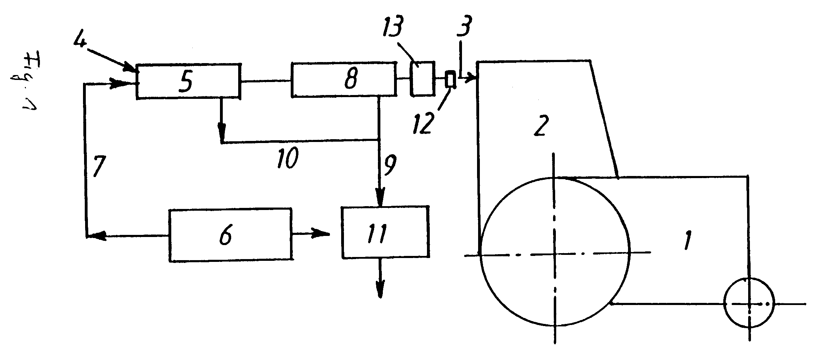

Weitere Erläuterungen zu der Erfindung sind dem in der Figur schematisch dargestellten Ausführungsbeispiel zu entnehmen.

Die Figur zeigt einen zum Spritzen von Pflanzenschutzmitteln eingesetzten Traktor 1 mit einer Fahrzeugkabine 2, die über eine Leitung 3 mit gereinigter Frischluft versorgt wird. Zur Reinigung wird die über eine Leitung 4 zuströmende, mit Pflanzenschutzaerosolen und -dämpfen beladene Frischluft zunächst in einer Hochleistungsnaßabscheidungsstufe 5 mit Waschwasser, welches aus einem Frischwassertank 6 über eine Leitung 7 zugeführt wird, innig vermischt, wobei bereits ein großer Teil der schädlichen Aerosole und Dämpfe in die entsprechenden Wassertröpfchen eingebunden wird. Anschließend werden innerhalb der Hochleistungsnaßabscheidungsstufe unter Ausnutzung der unterschiedlichen Trägheiten von Gas und Kondensat die Phasen wieder getrennt.

Die weitere Reinigung der Frischluft erfolgt dann in einer zweiten Reinigungsstufe 8, die als sogenannte Kühlfalle ausgeführt ist. Hier wird die mit den Restmengen an Aerosolen und Dämpfen sowie mit Wasserdampf angereicherte Luft durch Zufuhr von Kälte, die aus dem Kreislauf der vorgesehenen Klimaanlage einzukoppeln ist, zunächst partiell kondensiert und dann einer Phasentrennung unterzogen. Das die Schadstoffe enthaltende Kondensat wird gesammelt, beispielsweise im Sumpf eines Abscheidegefäßes und über eine Leitung 9 zusammen mit dem über eine Leitung 10 zuströmenden Kondensat aus der Naßabscheidungsstufe 5 in einen Behälter 11 für die zu versprühende Pflanzenschutzmittellösung eingeleitet.

Falls erforderlich, beispielsweise aus Sicherheitsgründen, kann die die Reinigungsstufe 8 verlassende saubere Frischluft vor der Einspeisung in die Fahrzeugkabine 2 noch über ein sogenanntes Sicherheitsfilter 13 geleitet werden.

Ein Feuchtemesser 12 registriert den Restfeuchtegehalt der gereinigten Luft. Aus einem zu starken Anstieg des Feuchtegehaltes kann beispielsweise auf Störungen im System geschlossen werden, die beispielsweise auf einen Tropfendurchriß in der Naßreinigungsstufe 5 bzw. auf eine zu geringe Kältezufuhr in der Reinigungsstufe 8 zurückzuführen sein können.

## Patentansprüche

1. Verfahren zur Abscheidung von Pflanzenschutzmittelaerosolen und dämpfen aus der einer Fahrzeugkabine zuzuführenden Frischluft, dadurch gekennzeichnet, daß die beladene Frischluft einer partiellen Kondensation mit anschließender Phasentrennung unterzogen wird, wobei die für die partielle Kondensation benötigte Kälte aus dem Kältekreislauf einer für die Fahrzeugkabine vorgesehenen Klimaanlage eingekoppelt wird.

2. Verfahren nach den Ansprüchen 1 oder 2, dadurch gekennzeichnet, daß die nach der Phasentrennung anfallende abgekühlte Luft im indirekten Wärmetausch mit der partiell zu kondensierenden Frischluft erwärmt wird.

3. Verfahren nach einem der Ansprüche 1 bis 3, dadurch gekennzeichnet, daß der partiellen Kondensation eine mit Wasser betriebene Naßabscheidungsstufe vorgeschaltet wird.

4. Verfahren nach einem der Ansprüche 1 bis 4, dadurch gekennzeichnet, daß die abgetrennten Kondensatmengen dem Behälter für die Pflanzenschutzmittellösung zugeführt werden.

5. Verfahren nach einem der Ansprüche 1 bis 5, dadurch gekennzeichnet, daß der gereinigte Luftstrom vor Eintritt in die Fahrzeugkabine über ein weiteres Feststoffilter geleitet wird.

6. Verfahren nach einem der Ansprüche 1 bis 6, dadurch gekennzeichnet, daß der gereinigte Luftstrom über einen Feuchtefühler geleitet wird.

## Claims

1. Process for separation of plant-protective agent aerosols and vapours from the fresh air to be fed to a vehicle cab, characterised in that the laden fresh air is subjected to partial condensation and subsequent phase separation, the cold required for the partial condensation being obtained from the cooling circuit of an air conditioning system provided for the vehicle cab.

2. Process according to claims 1 or 2, characterised in that the cooled air produced after the phase separation is heated in indirect heat exchange with the fresh air to be subjected to partial condensation.

3. Process according to one of claims 1 to 3, characterised in that the partial condensation is preceded by a wet separating stage operated with water.

4. Process according to one of claims 1 to 4, characterised in that the separated quantities of condensate are fed to the container for the plant-protective agent solution.

5. Process according to one of claims 1 to 5, characterised in that the cleaned stream of air is passed via a further solids filter before entering the vehicle cab.

6. Process according to one of claims 1 to 6, characterised in that the cleaned stream of air is passed via a moisture sensor.

## Revendications

1. Procédé pour séparer des aérosols de protection des plantes et des vapeurs de l'air frais devant alimenter une cabine de véhicule,
caractérisé en ce que
l'air frais chargé est soumis à une condensation partielle suivie d'une séparation des phases, le froid nécessaire à cette condensation partielle étant alimenté sur le circuit de réfrigération d'une installation de climatisation prévue pour la cabine de véhicule.

2. Procédé selon la revendication 1,
caractérisé en ce que
l'air refroidi issu de la séparation des phases est réchauffé par échange thermique indirect avec l'air frais à condenser partiellement.

3. Procédé selon les revendications 1 et 2,
caractérisé en ce qu'
il est prévu en amont de la condensation partielle un étage de séparation par voie humide, alimenté en eau.

4. Procédé selon l'une des revendications 1 à 3,
caractérisé en ce que
les condensats séparés sont envoyés au réservoir contenant la solution d'agents de protection des plantes.

5. Procédé selon l'une des revendications 1 à 4,
caractérisé en ce que
l'air frais épuré, avant de pénétrer dans la cabine, passe à travers un filtre sec.

6. Procédé selon l'une des revendications 1 à 5,
caractérisé en ce que
l'air frais épuré est amené au contact d'un détecteur d'humidité.
